# EUROPEAN PATENT APPLICATION

(11) **EP 3 054 177 A1**
(43) Date of publication of application: **10.08.2016**
(21) Application number: 14851388.0
(22) Date of filing: 14.07.2014
(51) Int. Cl.: F16B 37/08, F16B 21/06

(54) **STUD LOCKING TOOL**

(30) Priority: 03.10.2013 JP 2013208254
(71) Applicant: Newfrey LLC, New Britain, CT 06053 (US)
(72) Inventor: KATO Hiroyuki, Utsunomiya-shi, Tochigi 321-0905 (JP)
(74) Representative: Haar, Lucas Heinz Jörn
(86) International application number: PCT/JP2014/068727
(87) International publication number: WO 2015/049909

(57) **Abstract**

Provided is a stud locking device capable of attaching a target member to a support member in adjacent relation. The stud locking device (1) comprises a first clip (10), a second clip (20), and a third clip (30). The first clip comprises a hollow inner cylinder portion, a first flange (11) provided at one end of the inner cylinder portion, locking pawls (13) formed inside the inner cylinder portion and configured to be engaged with a thread of a stud (60), and a coupling means for coupling with the second clip. The second clip comprises a hollow intermediate cylinder portion (22) configured to receive therein the inner cylinder portion of the first clip, a second flange (21) provided at one end of the intermediate cylinder portion, a coupling means for coupling with the first clip, and a coupling means for coupling with the third clip. The third clip comprises a hollow outer cylinder portion (32) configured to receive therein the intermediate cylinder portion of the second clip, a third flange (31) provided at one end of the outer cylinder portion, and a coupling means for coupling with the second clip.

## Description

### TECHNICAL FIELD

The present invention relates to a locking device usable for attaching a sheet-shaped target member (e.g., an undercover) to a support member (e.g., a panel of an automotive vehicle) onto which a stud (e.g., a threaded stud) is fixed. More specifically, it relates to a stud locking device configured to be used such that it is attached to a target member and then locked to a stud fixed onto a support member to thereby allow the target member to be attached to the support member.

### BACKGROUND ART

Generally, a locking device is used to attach a sheet-shaped target member such as an undercover to a support member such as a panel of an automotive vehicle. In advance of an operation of attaching a wide sheet-shaped target member such as an undercover to a panel, a plurality of threaded studs are fixedly attached onto the panel at respective given positions by means of welding or the like, and a plurality of mounting holes are formed in the target member at respective given positions to receive the studs therein respectively. Then, the target member is put on the panel and positioned to allow the threaded studs to be penetratingly inserted into corresponding ones of the mounting holes of the target member, and a plurality of nuts are engaged, respectively, with portions of the threaded studs protruding from the target member by using a tool or the like. In this manner, the target member is attached to a support member such as a panel of an automotive vehicle.

There has been known a stud locking device designed to facilitate such a target member attaching operation, wherein the stud locking device is configured to clamp a target member from opposite sides thereof by a first clip and a second clip, and, in this state, receive a stud in a stud-receiving hole, whereby the target member is attached to the stud.

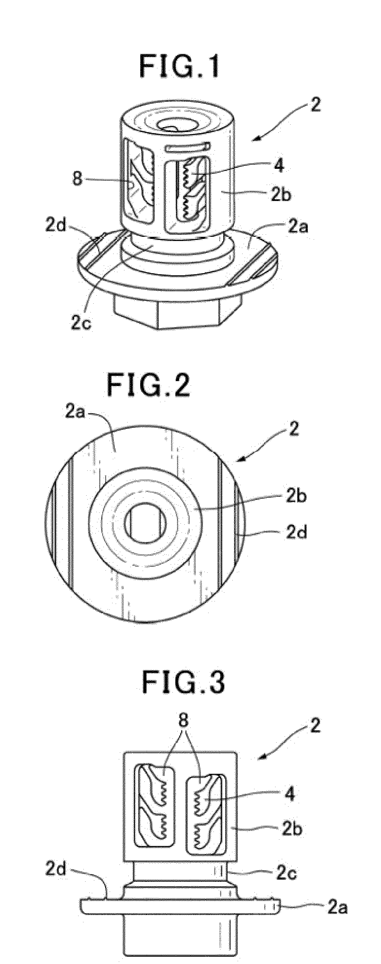

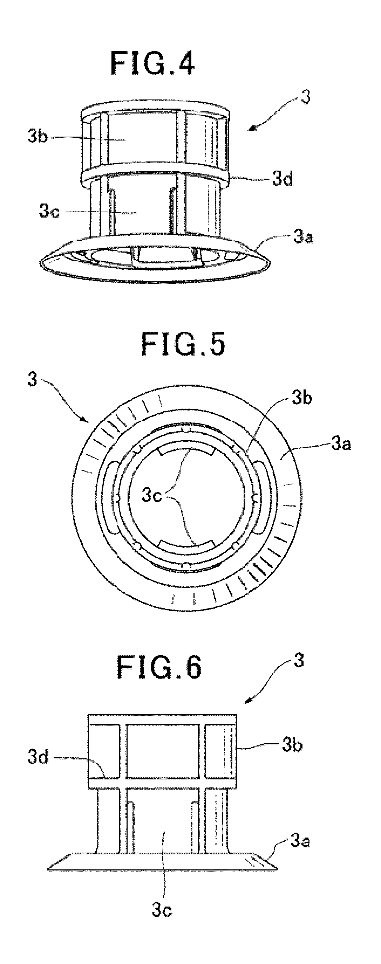

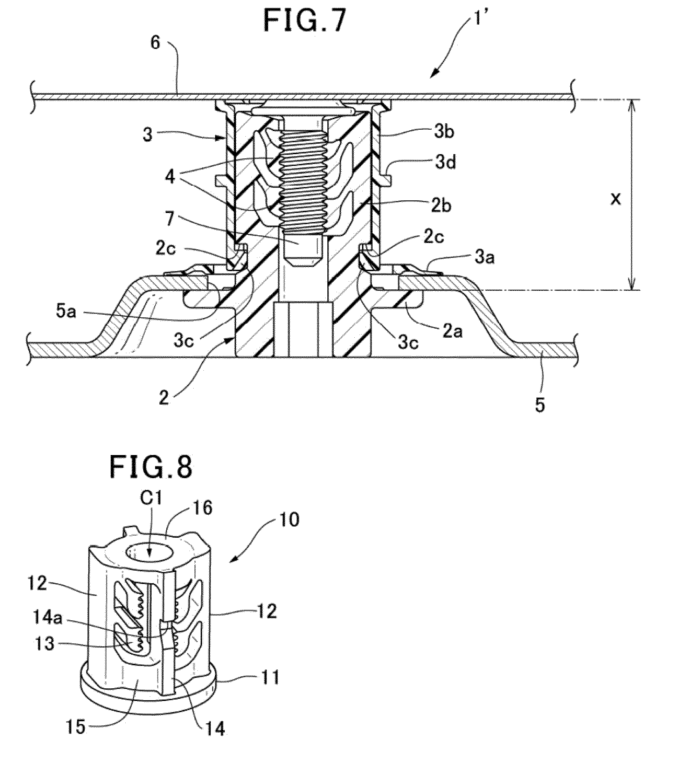

FIGS. 1 to 7 depict this type of stud locking device 1' comprising a first clip 2 and a second clip 3. FIGS. 1 to 3 depict the first clip 2, and FIGS. 4 to 6 depict the second clip 3. FIG. 7 is a sectional view depicting a state in which a target member (undercover) 5 is attached to a threaded stud 7 fixed onto a support member (vehicle body panel) 6.

FIG. 1, FIG. 2 and FIG. 3 are, respectively, a perspective view, a top plan view and a front view of the first clip 2. The first clip 2 comprises a tubular-shaped inner cylinder portion 2b, and a flange 2a formed at a lower end of the inner cylinder portion 2b. The inner cylinder portion 2b has an outer peripheral wall formed with a locking pawl-molding window 8 for allowing an aftermentioned locking pawl 4 to be molded inside the outer peripheral wall. The first clip 2 further comprises a locking pawl 4 provided inside the locking pawl-molding window 8 and configured to be engaged with the stud 7. The inner cylinder portion 2b also has a step-shaped fitting section 2c formed in an outer peripheral surface of the lower end of the inner cylinder portion 2b and configured to allow aftermentioned fitting pawls 3c of the second clip 3 to be fittingly engaged therewith. The flange 2a has a linear-shaped protrusion 2d formed on a surface thereof on the side of the inner cylinder portion 2b (on an upper surface thereof), and configured to come into contact with a surface of a target member (undercover) 5 to prevent the stud locking device 1' from being rotated against the target member.

FIG. 4, FIG. 5 and FIG. 6 are, respectively, a perspective view, a top plan view and a front view of the second clip 3. The second clip 3 comprises a tubular-shaped outer cylinder portion 3b, and a flange 3a formed at a lower end of the outer cylinder portion 3b. The outer cylinder portion 3b internally has a hollow space capable of receiving therein the inner cylinder portion 2b of the first clip 2. The outer cylinder portion 3b has a pair of fitting pawls 3c formed at positions adjacent to the flange 3a and configured be engaged with the fitting section 2c of the first clip 2. The outer cylinder portion 3b also has a rib 3d formed on an outer peripheral wall thereof and configured to reinforce the outer cylinder portion 3b.

FIG. 7 is a sectional view depicting a state in which the target member (under cover) 5 is attached to the stud 7 fixed onto the support member (vehicle body panel) 6. An operation of attaching the target member 5 to the support member 6 will be described.

The inner cylinder portion 2b of the first clip 2 is inserted into a mounting hole 5a of the target member 5, and the flange 2a of the first clip 2 is brought into contact with a lower surface of the target member 5. Then, the inner cylinder portion 2b of the first clip 2 is inserted inside the outer cylinder portion 3b of the second clip 3. Consequently, the fitting section 2c of the first clip 2 and the fitting pawls 3c of the second clip 3 are engaged with each other, so that the first clip 2 and the second clip 3 are coupled together in a state in which the target member 5 is clamped between the flange 2a of the first clip 2 and the flange 3a of the second clip 3.

Then, when the stud 7 fixed onto the support member 6 is received inside the inner cylinder portion 2b of the first clip 2, the locking pawl 4 is engaged with a thread of the stud 7, so that the stud locking device 1' is locked to the support member 6. In this way, the target member 5 is attached to the support member 6.

This conventional stud locking device 1' can be easily attached to the target member 5 by clamping a portion of the target member 5 around the mounting hole 5a between the flange 2a of the first clip 2 and the flange 3a of the second clip 3. Then, the target member 5 can be easily attached to the support member 6 by inserting, inside the stud locking device 1', the stud 7 fixed onto the support member 6.

However, in the first clip 2 of the conventional stud locking device 1', the inner cylinder portion 2b provided with the locking pawl 4 and the flange 2a for pressing the target member 5 are formed as an integral component. The flange 2a of the first clip 2 cannot be provided in a region corresponding to the locking pawl-molding window 8, because the locking pawl-molding window 8 needs to be formed in the inner cylinder portion 2b in a region around the locking pawl 4, in order to allow a molding die for the locking pawl 4 to be inserted inside the inner cylinder portion 2b therethrough.

Therefore, the flange 2a of the first clip 2 needs to be provided at an upper end of the inner cylinder portion 2b (an end of the inner cylinder portion 2b on a side opposite to the flange 2a in FIG. 7), or needs to be set apart from the upper end by a distance enough to keep away from the locking pawl-molding window 8. From a view point of reducing a portion of the stud locking device 1' protruding downwardly from the target member, the flange 2a of the first clip 2a needs to be provided apart from the upper end. FIG. 7 indicates a distance x between a lower surface of the support member 6, and the upper surface of the flange 2a being in contact with the lower surface of the target member 5. In this case, the flange 2a of the first clip 2a needs to be set apart from the support member 6 by the distance x. For this reason, the target member 5 cannot be attached to the support member 6 in adjacent relation.

The following Patent Document 1 discloses this type of stud locking device comprising a first clip and a second clip. In the stud locking device disclosed in the following Patent Document 1, a protrusion is formed on a surface of a target member, and a groove is formed in a surface a flange of the first clip and configured to receive therein the protrusion formed on the surface of the target member.

This makes it possible to prevent a relative rotation about an axis between the first clip and the target member, so as to prevent loosening of the stud locking device during use.

However, the stud locking device disclosed in the following Patent Document 1 involves a problem that the flange of the first clip needs to be set apart from an end of an inner cylinder portion of the first clip on a side opposite to the flange, so that the target member cannot be attached to a support member in adjacent relation, as with the conventional stud locking device.

Therefore, there is a need for a stud locking device capable of providing the flange in an outer peripheral region of the locking pawl-molding window.

There is also a need for a stud locking device capable of providing the flange for pressing a surface of a target member such as an undercover, at a position adjacent to an end of the stud locking device on a side opposite to the flange, thereby keeping down a length of the stud locking device protruding from the target member, and attaching the target member to a support member such as a panel of an automotive vehicle, in adjacent relation.

### CITATION LIST

### [Patent Document]

Patent Document 1: JP 2007-292146A

### SUMMARY OF INVENTION

### [Technical Problem]

It is therefore an object of the present invention to provide a stud locking device capable of providing a flange in an outer peripheral region of a locking pawl-molding window.

It is another object of the present invention to provide a stud locking device capable of keeping down a length thereof protruding from the target member, and thus attaching a target member to a support member in adjacent relation.

### [Solution to Technical Problem]

In order to achieve the above objects, one of two clips in the conventional stud locking device is molded as two separate components consisting of a first clip and a second clip, wherein the two components are assembled together to form a clip assembly, and then the clip assembly and a third clip are set to clamp a target member therebetween.

According to a first aspect of the present invention, there is provided a stud locking device which comprises a first clip, a second clip, and a third clip, wherein:
the first clip comprises a hollow inner cylinder portion, a first flange provided at one end of the inner cylinder portion, locking pawls formed inside the inner cylinder portion and configured to be engaged with a thread of a stud, and a coupling means for coupling with the second clip;
the second clip comprises a hollow intermediate cylinder portion configured to receive therein the inner cylinder portion of the first clip, a second flange provided at one end of the intermediate cylinder portion, a coupling means for coupling with the first clip, and a coupling means for coupling with the third clip; and
the third clip comprises a hollow outer cylinder portion configured to receive therein the intermediate cylinder portion of the second clip, a third flange provided at one end of the outer cylinder portion, and a coupling means for coupling with the second clip.

In the stud locking device of the present invention, a clip assembly as a combination of the first clip and the second clip, and the third clip, are set to clamp the target member from opposite sides thereof, and then the locking pawls of the first clip are engaged with the thread of the stud which is fixedly attached onto a support member, so that it becomes possible to easily and reliably attach the target member to the support member.

Preferably, in the stud locking device of the present invention, the inner cylinder portion of the first clip has a cross-sectionally non-circular outer shape, and the intermediate cylinder portion of the second clip has a cross-sectionally non-circular inner shape conforming to the outer shape of the inner cylinder portion of the first clip,
whereby, in a state in which the inner cylinder portion of the first clip is received in the intermediate cylinder portion of the second clip, the first clip is kept not to be rotated against the second clip.

This stud locking device is configured such that the first clip is kept not to be rotated against the second clip, so that it becomes possible to integrally rotate the first and second clips.

Preferably, in the above stud locking device, the intermediate cylinder portion of the second clip has a cross-sectionally circular outer shape, and the outer cylinder portion of the third clip has a cross-sectionally circular inner shape,
whereby, in a state in which the intermediate cylinder portion of the second clip is received in the outer cylinder portion of the third clip, the second clip is permitted to be rotated against the third clip.

In this stud locking device, the first and second clips can be integrally rotated in one direction to tighten the first clip against the stud, or the first and second clips can be integrally rotated in the opposite direction to detach the first clip from the stud.

Preferably, in the stud locking device of the present invention, the first clip has a locking pawl-molding window formed in the inner cylinder portion thereof in an outer peripheral region of the locking pawls formed inside the inner cylinder portion, wherein the stud locking device is configured such that, in a state in which the inner cylinder portion of the first clip is received in the intermediate cylinder portion of the second clip, the intermediate cylinder portion of the second clip is disposed in an outer peripheral region of the locking pawl-molding window.

In this stud locking device, the first clip and the second clip are molded as separate components, and then assembled into a clip assembly, so that the second flange of the second clip can be disposed in adjacent relation to the locking pawl-molding window of the first clip. This makes it possible to dispose the target member in adjacent relation to the support member.

Preferably, the stud locking device of the present invention is configured such that, in a state in which the inner cylinder portion of the first clip is received in the intermediate cylinder portion of the second clip, the first flange of the first clip is in contact with a stepped section provided in the second clip.

In this stud locking device, when the first flange of the first clip comes into contact with the stepped section provided in the second clip, it becomes possible to fix an axial position of the first clip against the second clip.

Preferably, the stud locking device of the present invention is configured to be attached to the stud through an operation of clamping a target member between the second flange of the second clip and the third flange of third clip, and then receiving the stud in a central hole of the stud locking device to cause the locking pawl to be engaged with the thread of the stud, wherein the stud is fixedly attached onto a support member.

In this stud locking device, the first clip and the second clip are assembled into a clip assembly, so that a combination of the clip assembly and the third clip can be used in the same manner as that in the conventional two-component stud locking device.

According to a second aspect of the present invention, there is provided a clip assembly comprising: a first clip and a second clip, wherein: the first clip comprises a hollow inner cylinder portion, a first flange provided at one end of the inner cylinder portion, locking pawls formed inside the inner cylinder portion and configured to be engaged with a thread of a stud, and a coupling means for coupling with the second clip; and the second clip comprises a hollow intermediate cylinder portion configured to receive therein the inner cylinder portion of the first clip, a second flange provided at one end of the intermediate cylinder portion, and a coupling means for coupling with the first clip, and
wherein the first clip has a locking pawl-molding window formed in the inner cylinder portion thereof in an outer peripheral region of the locking pawls formed inside the inner cylinder portion, and
wherein the stud locking device is configured such that, in a state in which the inner cylinder portion of the first clip is received in the intermediate cylinder portion of the second clip, the intermediate cylinder portion of the second clip is disposed in an outer peripheral region of the locking pawl-molding window.

The first clip and the second clip are assembled into an integral clip assembly to function as a single clip, so that it becomes possible to clamp a target member by the clip assembly and the third clip.

Preferably, in the clip assembly of the present invention, the inner cylinder portion of the first clip has a cross-sectionally non-circular outer shape, and the intermediate cylinder portion of the second clip has a cross-sectionally non-circular inner shape conforming to the outer shape of the inner cylinder portion of the first clip,
whereby, in the state in which the inner cylinder portion of the first clip is received in the intermediate cylinder portion of the second clip, the first clip is kept not to be rotated against the second clip.

Preferably, in the clip assembly of the present invention, the second flange of the second clip is disposed outside a circumference of the locking pawl-molding window, in the state in which the inner cylinder portion of the first clip is received in the intermediate cylinder portion of the second clip.

### [Effect of Invention]

The present invention makes it possible to obtain a stud locking device capable of providing a flange in an outer peripheral region of a locking pawl-molding window.

The present invention also makes it possible to obtain a stud locking device capable of attaching a target member to a support member in adjacent relation.

### BRIEF DESCRIPTION OF DRAWINGS

FIG. 1 is a perspective view of a first clip of a conventional stud locking device.
FIG. 2 is a top plan view of the first clip in FIG. 1.
FIG. 3 is a front view of the first clip in FIG. 1.
FIG. 4 is a perspective view of a second clip of the conventional stud locking device.
FIG. 5 is a top plan view of the second clip in FIG. 4.
FIG. 6 is a front plan view of the second clip in FIG. 4.
FIG. 7 is a sectional view depicting a state in which a target member is attached to a support member with a stud, using the conventional stud locking device.
FIG. 8 is a perspective view of a first clip of a stud locking device according to one embodiment of the present invention.
FIG. 9 is a perspective view of the first clip in FIG. 8, when viewed from a different direction.
FIG. 10 is a top plan view of the first clip in FIG. 8.
FIG. 11 is a front plan view of the first clip in FIG. 8.
FIG. 12 is a right side view of the first clip in FIG. 8.
FIG. 13 is a bottom view of the first clip in FIG. 8.
FIG. 14 is a sectional view of the first clip in FIG. 8, taken along the line A-A in FIG. 10.
FIG. 15 is a sectional view of the first clip in FIG. 8, taken along the line B-B in FIG. 10.
FIG. 16 is a perspective view of a second clip of the stud locking device according to this embodiment.
FIG. 17 is a perspective view of the second clip in FIG. 16, when viewed from a different direction.
FIG. 18 is a top plan view of the second clip in FIG. 16.
FIG. 19 is a front view of the second clip in FIG. 16.
FIG. 20 is a right side view of the second clip in FIG. 16.
FIG. 21 is a bottom view of the second clip in FIG. 16.
FIG. 22 is a sectional view of the second clip in FIG. 16, taken along the line C-C in FIG. 18.
FIG. 23 is a sectional view of the second clip in FIG. 16, taken along the line D-D in FIG. 18.
FIG. 24 is a perspective view of a third clip of the stud locking device according to this embodiment.
FIG. 25 is a perspective view of the third clip in FIG. 24, when viewed from a different direction.
FIG. 26 is a top plan view of the third clip in FIG. 24.
FIG. 27 is a front view of the third clip in FIG. 24.
FIG. 28 is a right side view of the third clip in FIG. 24.
FIG. 29 is a bottom view of the third clip in FIG. 24.
FIG. 30 is a sectional view of the third clip in FIG. 24, taken along the line E-E in FIG. 26.
FIG. 31 is a sectional view of the third clip in FIG. 24, taken along the line F-F in FIG. 26.
FIG. 32 is a perspective view depicting a state in which the first clip and the second clip are fittingly engaged with each other.
FIG. 33 is a front view depicting the state in FIG. 32, in which the first clip and the second clip are fittingly engaged with each other.
FIG. 34 is a sectional view depicting a state in which a target member is attached to a support member with a stud, using the stud locking device according to this embodiment, taken along the line A-A.
FIG. 35 is a sectional view of the stud locking device in FIG. 34, taken along the line B-B.

### DESCRIPTION OF EMBODIMENTS

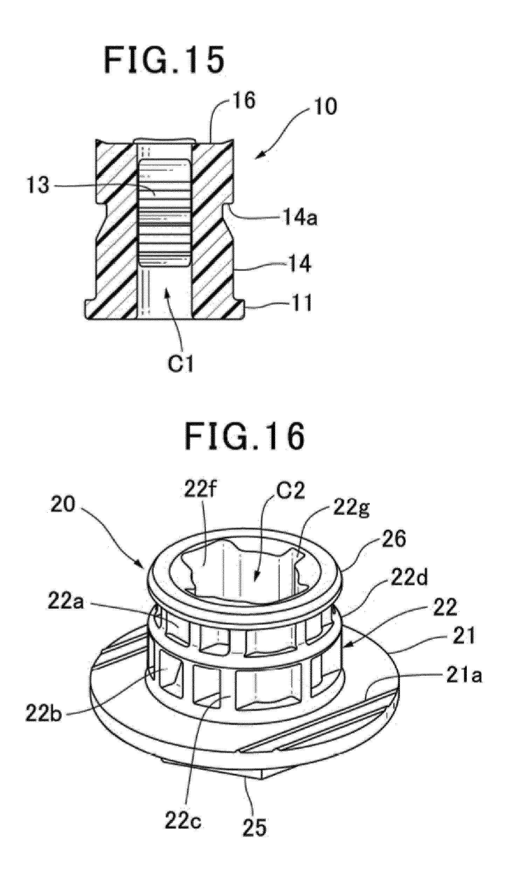

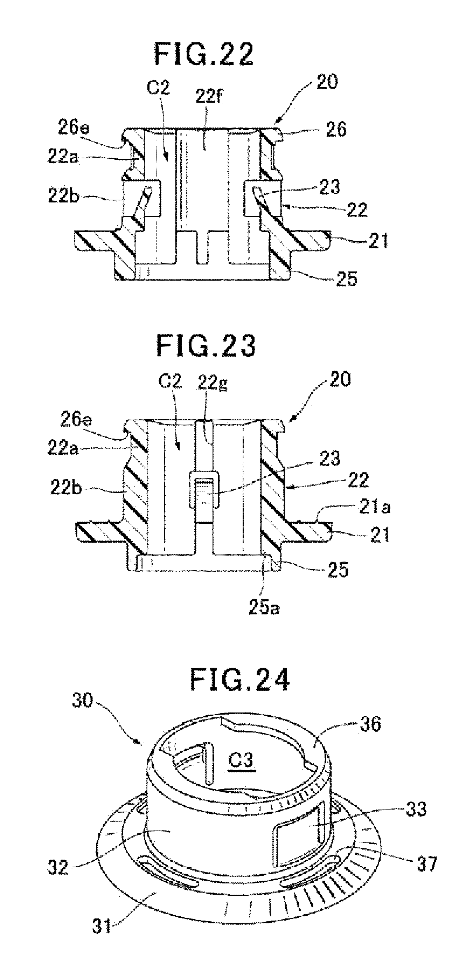

With reference to the drawings, the present invention will now be described based on an embodiment thereof. A stud locking device 1 according to one embodiment of the present invention comprises: a first clip 10 made of a hard synthetic resin and molded as a single piece as depicted in FIGS. 8 to 15; a second clip 20 made of a hard synthetic resin and molded as a single piece as depicted in FIGS. 16 to 23; and a third clip 30 made of a hard synthetic resin and molded as a single piece as depicted in FIGS. 24 to 31.

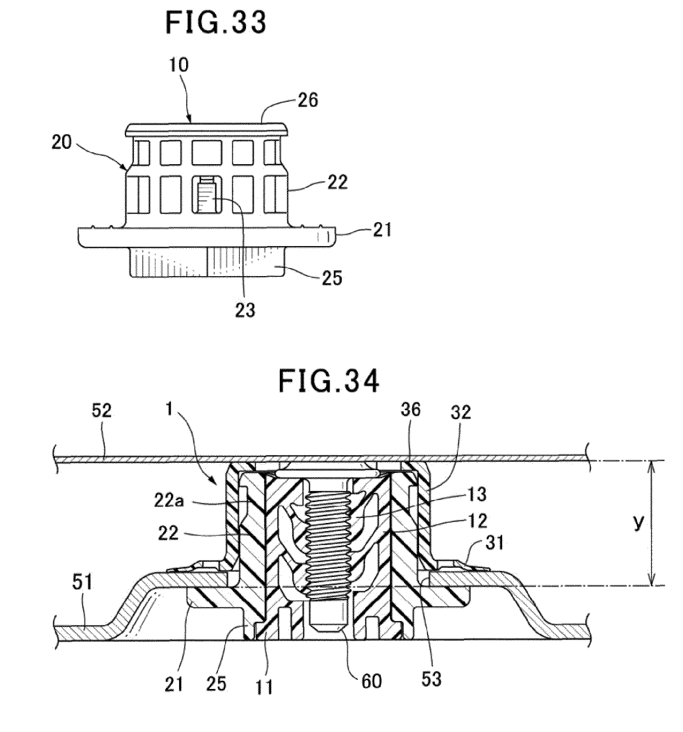

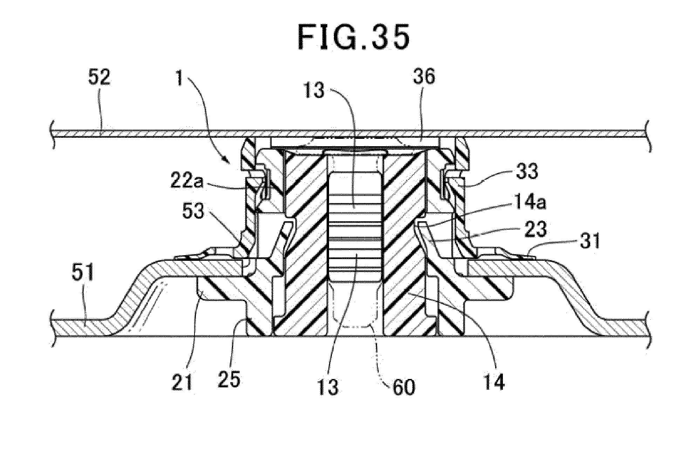

Before describing respective configurations of the first clip 10, the second clip 20 and the third clip 30, an outline of a configuration of the stud locking device 1 will be described. FIGS. 34 and 35 are sectional views depicting a state in which a target member 51 is attached to a stud 60 fixed onto a support member 52 by using the stud locking device 1 according to this embodiment. The first clip 10 and the second clip 20 of the stud locking device 1 are assembled together to form a clip assembly, and then the clip assembly and the third clip 30 are coupled together while clamping a sheet-shaped target member 51 such as an undercover therebetween. When a stud 60 fixedly attached onto a support member 52 such as a panel of an automotive vehicle is inserted into an aftermentioned first central hole C1 of the stud locking device 1, first locking pawls 13 is locked to a thread of the stud 60, so that the target member 51 is attached to the support member 52.

More specifically, a second flange 21 of the clip assembly consisting of the first clip 10 and the second clip 20 comes into contact with one of opposite surfaces of the target member 51, and a third flange 31 of the third clip 30 comes into contact with the other surface of the target member 51.

A plurality of the studs 60 are fixedly attached to the support member 52 by means of welding or the like, while being laid out at given intervals and in a given arrangement, so as to retain a wide sheet-shaped target member such as an undercover, at a plurality of positions. The stud 60 used in this embodiment is a threaded stud having a thread formed in an outer peripheral surface thereof. While the stud 60 may be a grooved stud having a circumferential groove formed in an outer peripheral surface thereof, the threaded stud is preferable because it is convenient for detaching the target member from the support member.

The sheet-shaped target member 51 such as an undercover is formed with a plurality of mounting holes 53 at respective positions corresponding to those of the plurality of studs 60 to allow the studs 60 to penetrate therethrough, respectively.

The following description about this embodiment will be described on the assumption that a side of the support member such as a vehicle body is an upper side, and a side of the target member such as an undercover is a lower side (downside).

### (First Clip)

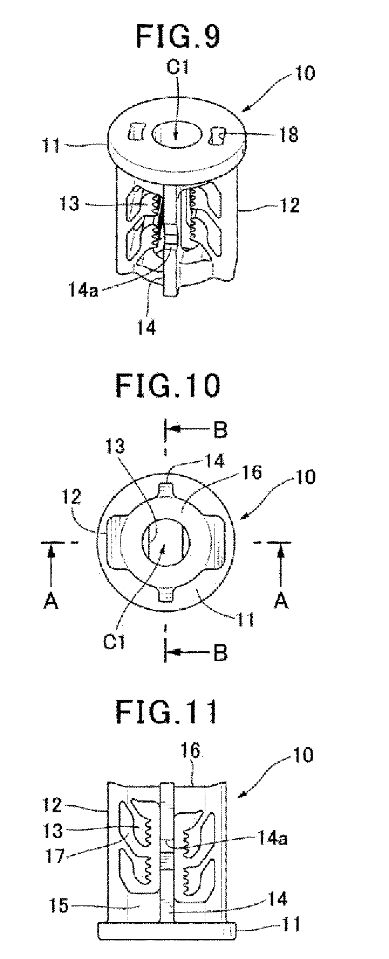

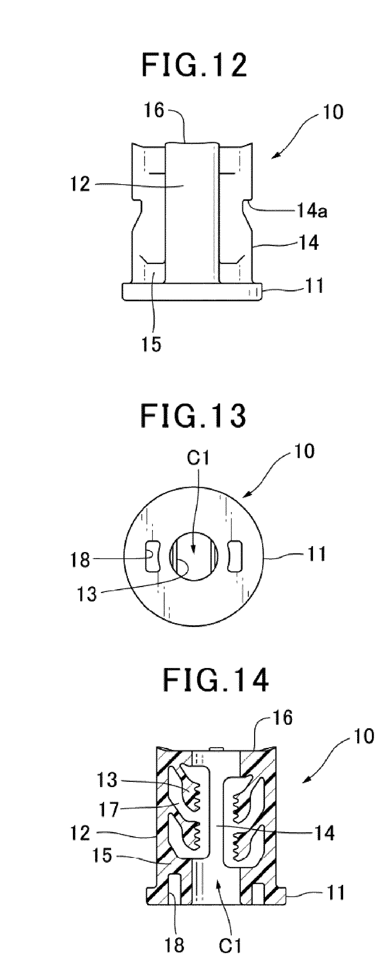

With reference to FIGS. 8 to 15, the first clip 10 will be described. FIG. 8 and FIG. 9 are, respectively, a perspective view of the first clip 10 of the stud locking device 1 according to this embodiment, and a perspective view of the first clip 10, when viewed from a different direction, and FIG. 10, FIG. 11, FIG. 12 and FIG. 13 are, respectively, a top plan view, a front plan view, a right side view and a bottom view of the first clip 10. FIG. 14 and FIG. 15 are, respectively, a sectional view of the first clip 10, taken along the line A-A in FIG. 10, and a sectional view of the first clip 10, taken along the line B-B in FIG. 10.

As depicted in FIGS. 8 and 11, the first clip 10 has an approximately circular disk-shaped first flange 11 formed at a lower end thereof, and an inner cylinder portion adjacent to the first flange 11. The inner cylinder portion comprises: a pair of main pillars 12 each extending in an axial direction (direction of an axis) of the first clip 10; a pair of auxiliary pillars 14 each extending in the axial direction; and a base section 15 extending between adjacent ones of the main pillars 12 and the auxiliary pillars 14 in side-by-side relation to the first flange 11 and having a diameter less than that of the first flange 11.

Each of the pair of main pillars 12 extends upwardly in the axial direction from a respective one of two positions on the first flange 11 opposed to each other with respect to the axis.

As depicted in FIGS. 11 and 14, two first locking pawls 13 extend obliquely downwardly from one of the main pillars 12 toward the axis. Each of the first locking pawls 13 is formed with a plurality of pawl elements each engageable with a thread of the stud. Further, two first locking pawls 13 extend obliquely downwardly from the other main pillar 12 opposed to the one main pillar 12 toward the axis. Each of two pairs of two opposed first locking pawls 13 are arranged to be engageable with the thread of the stud from respective opposite sides of the stud. Specifically, positions of the two opposed first locking pawls 13 are offset in the axial direction in conformity to a pitch of the thread of the stud.

Each of the pair of auxiliary pillars 14 extends upwardly along the axis from a respective one of two positions rotated 90 degrees from the respective positions of the main pillars 12. Each of the auxiliary pillars 14 has a circumferential width less than that of each of the main pillars 14. As depicted in FIG. 15 which is a sectional view taken along the line B-B in FIG. 10, each of the opposed auxiliary pillars 14 has a recess formed in an axially intermediate region of an outer peripheral surface thereof, wherein an end of the recess is formed as a fitting section 14a. The fitting section 14a serves as a coupling means for coupling with the second clip.

A first end portion 16 is formed at a distal end (upper end) of each of the main pillars 12 on a side opposite to the first flange 11 and at a distal end (upper end) of each of the auxiliary pillars 14 on a side opposite to the first flange 11. A top of each of the main pillars 12 and a top of each of the auxiliary pillars 14 continuously connect to the first end portion 16. The first end portion 16 has an upper surface inclined such that a central region thereof is slightly lowered. The first end portion 16 has a planar shape in which a region corresponding to each of the tops of the opposed main pillars 12 and the opposed auxiliary pillars 14 has a relatively large outer diameter, and a region between adjacent two of the tops of the opposed main pillars 12 and the opposed auxiliary pillars 14 has a relatively small outer diameter.

A first central hole C1 is formed to extend from the first flange 11 to the first end portion 16 along the axis of the first clip 10, so as to allow the stud to be penetratingly inserted thereinto. The first central hole C1 has a circular cross-section in a region between the first flange 11 and the first end portion 16.

A region surrounded by adjacent two of the main pillars 12 and the auxiliary pillars 14, the base section 15 and the first end portion 16 is defined as a locking pawl-molding window 17, wherein the first locking pawls 13 are provided inside the locking pawl-molding windows 17. The locking pawl-molding windows 17 are configured to allow a molding die to be inserted therethrough so as to form the first locking pawls 13.

As depicted in FIGS. 9 and 13 which are, respectively, a perspective view of the first clip 10, when viewed obliquely upwardly from a lower side thereof, and a bottom view of the first clip 10, a pair of holes 18 are formed to penetratingly extend from the first flange 11 to the base section 15 at respective positions just below the pair of main pillars 12. The holes 18 are formed to reduce a required amount of material for the first clip 10.

### (Second Clip)

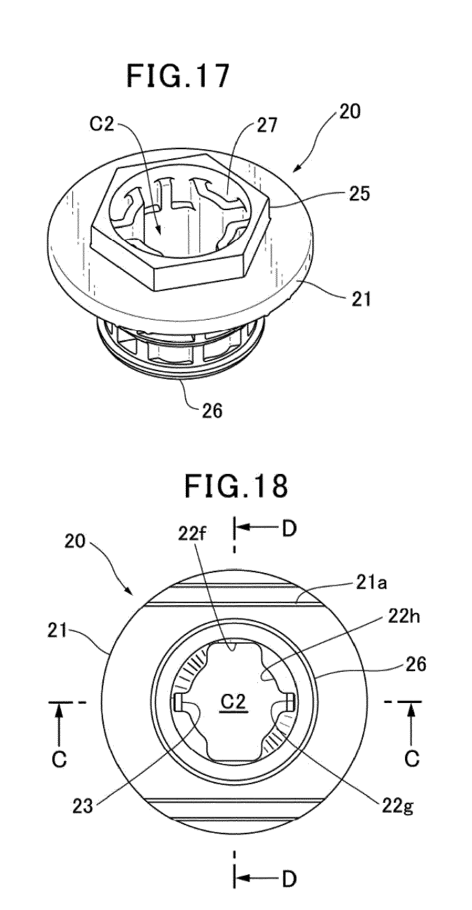

With reference to FIGS. 16 to 23, the second clip 20 will be described. FIG. 16 and FIG. 17 are, respectively, a perspective view of the second clip 20 of the stud locking device 1, and a perspective view of the second clip 20, when viewed from a different direction, and FIG. 18, FIG. 19, FIG. 20 and FIG. 21 are, respectively, a top plan view, a front plan view, a right side view and a bottom view of the second clip 20. FIG. 22 and FIG. 23 are, respectively, a sectional view of the second clip 20, taken along the line C-C in FIG. 18, and a sectional view of the second clip 20, taken along the line D-D in FIG. 18.

In a state in which the first clip 10 and the second clip 20 are assembled together, the line A-A in FIG. 10 and the line D-D in FIG. 18 are coincident with each other, and the line B-B in FIG. 10 and the line C-C in FIG. 18 are coincident with each other.

The second clip 20 comprises: a circular disk-shaped second flange 21; a hexagonal portion 25 having a cross-sectionally hexagonal shape extending from the second flange 21 in one direction of an axis of the second clip 20 (downwardly); an approximately circular tube-shaped intermediate cylinder portion 22 extending from the second flange 21 in the other direction of the axis (upwardly); and a second end portion 26 formed at a distal end of the intermediate cylinder portion 22.

A second central hole C2 is formed inside the second flange 21, the hexagonal portion 25 and the intermediate cylinder portion 22 to have an inner shape conforming to an outer shape of the inner cylinder portion of the first clip 10, so as to receive therein the first flange 11, the main pillars 12 and the auxiliary pillars 14.

As depicted in FIGS. 16 and 18, the second flange 21 has a plurality of cross-sectionally convex, linear-shaped protrusions 21 a formed in an upper surface of the second flange 21 at respective positions opposed to each other with respect to the intermediate cylinder portion 22. The protrusions 21 a are configured to be pressed against the target member to thereby prevent the second clip 20 from being rotated against the target member.

As depicted in FIG. 17 which is a perspective view of the second clip 20, when viewed obliquely upwardly from a lower side thereof, the hexagonal portion 25 has a hexagonal outer shape. Thus, after attaching the target member to the support member using the stud locking device 1, a tightening operation can be performed by turning the hexagonal portion 25 in one direction using a tool such as a spanner (screw wrench). On the other hand, a detaching operation can be performed by turning the hexagonal portion 25 in an opposite direction using a tool such as a spanner.

As depicted in FIG. 23 which is a sectional view taken along the line D-D in FIG. 18, a first stepped section 25a is formed in an inner peripheral surface of the hexagonal portion 25 to receive therein the first flange 11 when the first clip 10 is inserted into the second central hole C2 from therebelow.

A second central hole C2 is formed inside the hexagonal portion 25, the second flange 21, the intermediate cylinder portion 22 and the second end portion 26 of the second clip 20 to have an inner shape conforming to an outer shape of the first clip 10, so as to receive therein the first flange 11, the base section 15, the main pillars 12, the auxiliary pillars 14 and the first end portion 16 of the first clip.

An inner peripheral surface of the second clip 20 comprises a pair of main pillar-receiving regions 22f for receiving therein the respective main pillars 12, a pair of auxiliary pillar-receiving regions 22g for receiving therein the respective auxiliary pillars 14, and four small inner-diameter regions 22h between respective adjacent ones of the main pillar-receiving regions 22f and the auxiliary pillar-receiving regions 22g.

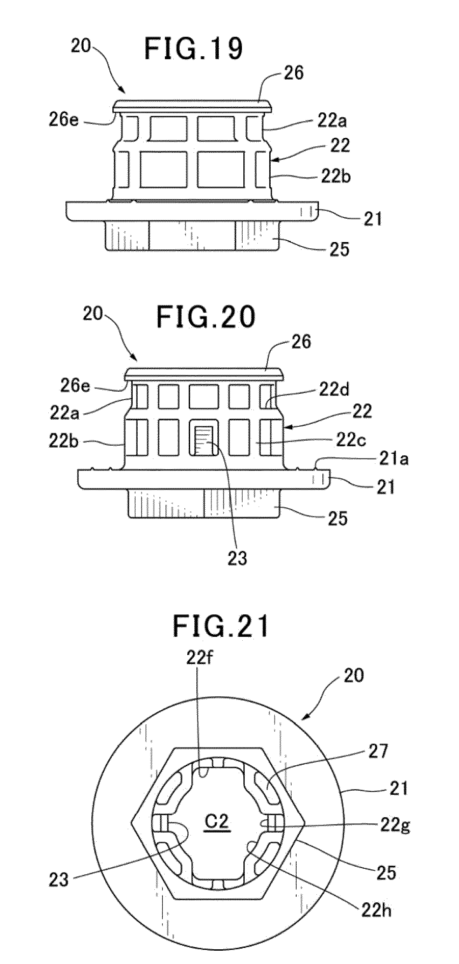

As depicted in FIGS. 17 and 21, a wall surface of each of the small inner-diameter regions 22h with a relatively small inner diameter has a shape protruding toward an inward side of the second central hole C2.

Each region of an outer peripheral surface of the second clip 20 corresponding to the small inner-diameter region 22h is formed with a recess 27. Each of the small inner-diameter regions 22h is formed in a shape conforming to that of the region between adjacent two of the main pillars 12 and the auxiliary pillars 14.

The intermediate cylinder portion 22 has a plurality of vertical rib 22c and a plurality of horizontal rib 22d formed on an outer peripheral surface thereof, and a plurality of regions of the outer peripheral surface surrounded by crossing ones of the ribs 22c, 22d are formed as a recesses, whereby it becomes possible to reduce a required amount of component material by the recesses, while reinforcing the intermediate cylinder portion 22 by the ribs 22c, 22d. The intermediate cylinder portion 22 has an inner peripheral surface defining a part of the second central hole C2 and having a shape conforming to the outer shape of the first clip 10.

As depicted in FIG. 23 which is sectional view taken along the line D-D in FIG. 18, the intermediate cylinder portion 22 has a lower section 22b, and a small-diameter section 22a located on an upper side of the lower section 22b and having an outer diameter less than that of the lower section 22a.

The second end portion 26 lies on an upper side of and adjacent to the small-diameter section 22a of the intermediate cylinder portion 22. The second end portion 24 has an upper surface inclined such that it is gradually lowered toward a center thereof. The second end portion 26 has an inner peripheral surface defining a part of the second central hole C2 and having a shape conforming to the outer shape of the first clip 10. The second end portion 26 has a circular outer shape whose outer diameter is greater than the outer diameter of the small-diameter section 22a and equal to the outer diameter of the lower section 22b. Therefore, a second stepped section 26e is formed on a lower side of the second end portion 26.

As depicted in FIG. 22 which is a sectional view taken along the line C-C in FIG. 18, a pair of second locking pawls 23 are provided inside the lower section 22b of the intermediate cylinder portion 22. The second locking pawls 23 are configured to be engaged with the fitting section 14a of the first clip 10 when the first clip 10 and the second clip 20 are assembled together, so as to keep the first and second clips 10, 20 from being disengaged from each other. The second locking pawls 23 serve as a coupling means for coupling with the first clip 10.

The first clip 10 has the main pillars 12 and the auxiliary pillars 14, each having a relatively large outer diameter. The second clip 20 has regions for receiving therein respective ones of the main pillars 12 and the auxiliary pillars 14 in the second central hole C2 of the second clip 20 in cross-section. Thus, during an operation of inserting the first clip 10 into the second central hole C2 of the second clip 20, the first clip 10 is positioned in a direction about the axis, and, even after assembling, the first clip 10 is kept not to be rotated against the second clip 20.

### (Third Clip)

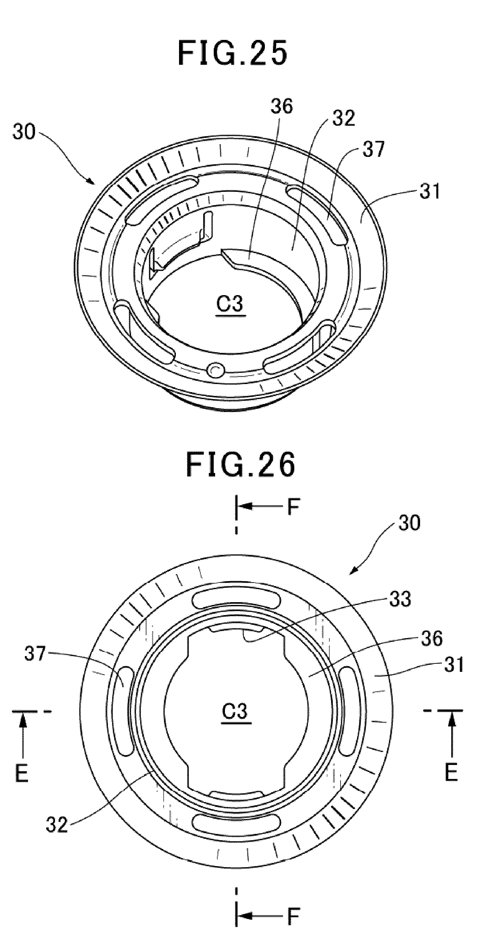

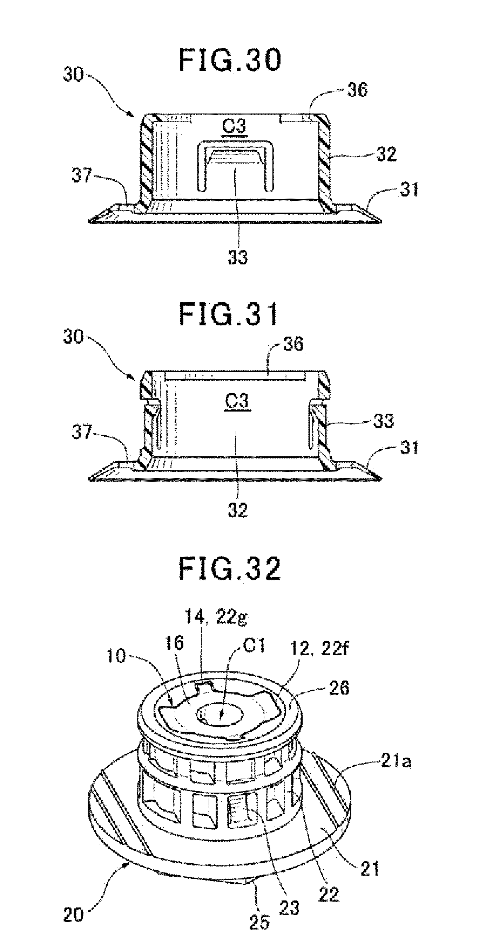

With reference to FIGS. 24 to 31, the third clip 30 will be described. FIG. 24 and FIG. 25 are, respectively, a perspective view of the third clip 30, and a perspective view of the third clip 30, when viewed from a different direction, and FIG. 26, FIG. 27, FIG. 28 and FIG. 29 are, respectively, a top plan view, a front plan view, a right side view and a bottom view of the third clip 30. FIG. 30 and FIG. 31 are, respectively, a sectional view of the third clip 30, taken along the line E-E in FIG. 26, and a sectional view of the third clip 30, taken along the line F-F in FIG. 26.

The third clip 30 comprises: a third flange 31 having a circular outer shape; an approximately circular tube-shaped outer cylinder portion 32 extending upwardly in the axial direction from the third flange 31; and a third end portion 36 formed at an upper end of the outer cylinder portion 32. A third central hole C3 is formed inside the third flange 31 and the outer cylinder portion 32 to receive therein the intermediate cylinder portion 22 and the second end portion 26 of the second clip 20.

In the attached state of the target member, the third flange 31 is in contact with an upper surface of the target member. The third flange 31 has a shape which gradually expands outwardly and obliquely downwardly and is capable of elastically pressing the target member.

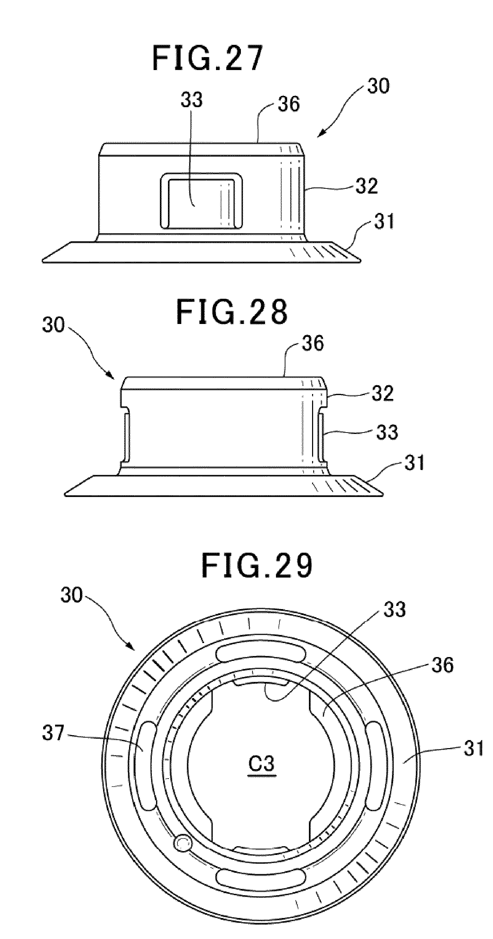

As depicted in FIGS. 25 and 29 which are, respectively, a perspective view of the third clip 30, when viewed obliquely upwardly from a lower side thereof, and a bottom view of the third clip 30, four elongated flange holes are formed in a region of the third flange 31 adjacent to the outer cylinder portion 32 at even intervals to extend in a circumferential direction of the third flange 31. The flange holes 37 assists the third flange 31 in elastically bending.

The outer cylinder portion 32 has an approximately circular tube shape. The third central hole C3 inside the outer cylinder portion 32 is configured to receive therein the intermediate cylinder portion 22 of the second clip 20.

The third end portion 36 is formed at an upper end of the outer cylinder portion 32. The third end portion 32 has a flat upper surface. In the state in which the target member is attached to the support member using the stud locking device 1, the upper surface of the third end portion 36 is in contact with the support member 52. On the other hand, a lower surface of the third end portion 36 is in contact with the second end portion 26 of the second clip 20.

The outer cylinder portion 32 has a pair of third locking pawls 33 opposed to each other. The third locking pawls 33 serve as a third clip-side coupling means for coupling the second clip 20 and the third clip 30 together. As depicted in FIGS. 24 and 27, each of the third locking pawls 33 is connected to the outer cylinder portion 32 via a lower end thereof, and separated from the outer cylinder portion 32 by two right and left, vertically-extending slits and one upper, horizontally-extending slit each formed in the outer cylinder portion 32. Therefore, the third locking pawl 33 can be easily elastically bent.

When the intermediate cylinder portion 22 of the second clip 20 is inserted into the outer cylinder portion 32 of the third clip 30, the third locking pawls 33 are fitted into and engaged with the small-diameter section 22a of the intermediate cylinder portion 22 of the second clip 20. The small-diameter section 22a serves as a connection means for coupling with the third clip 30.

In order to reliably maintain the coupling to the second clip 2, a plurality of the third locking pawl 33 are provided (in the depicted embodiment, two).

As depicted in FIG. 30 which is a sectional view taken along the line E-E in FIG. 26, the third end portion 36 has an inner diameter less than an inner diameter of the outer cylinder portion 32, and extends toward the axis, in the direction along the line E-E.

As depicted in FIG. 31 which is a sectional view taken along the line F-F in FIG. 26, the third end portion 36 has an inner diameter equal to an inner diameter of the outer cylinder portion 32, in the direction along the line F-F.

Thus, the second end portion 26 of the second clip 20 is received by the lower surface of the third end portion 36 extending toward the axis (in the direction along the line E-E).

Each of the intermediate cylinder portion 22 and the second end portion 26 of the second clip 20 has a cross-sectionally circular outer shape. The third central hole C3 inside the outer cylinder portion 32 of the third clip 30 also has a cross-sectionally circular shape. The third locking pawls 33 of the third clip 30 can be engaged with the small-diameter section 22a of the second clip 20 in any radial direction about the axis. Thus, when the second clip 20 is inserted into the third clip 30, a relative angle therebetween about the axis may be freely changed.

### (Assembly of First Clip and Second Clip)

In this embodiment, the first clip 10 and the second clip 20 in a fitted state are brought into contact with one of opposite surfaces of the target member. FIG. 32 is a perspective view depicting a state in which the first clip 10 and the second clip 20 are fitted together. FIG. 33 is a front view depicting the state in which the first clip 10 and the second clip 20 are fitted together.

In the state in which the first clip 10 and the second clip 20 are fitted together, the first end portion 16 of the first clip 10 and the second end portion 26 of the second clip 20 are located on an upper side of the clip assembly. The first clip 10 is disposed within the second clip 20. The main pillars 12 of the first clip 10 are received, respectively, in the main pillar-receiving regions 22f, and the auxiliary pillars 14 are received, respectively, in the auxiliary pillar-receiving regions 22g.

An upper surface of the first flange 11 of the first clip 10 is brought into contact with the first stepped section 25a of the hexagonal portion 25 of the second clip 20. The upper surface of the second end portion 26 of the second clip 20 is an inclined surface which is approximately continuous with the inclination of the upper surface of the first end portion 16 of the first clip 10, and is lowered toward a central region thereof.

The second locking pawls 23 of the second clips 20 are engaged, respectively, with the fitting sections 14a of the auxiliary pillars 14 of the first clip 10, so that the first clip 10 is kept from being pulled out of the second clip 20.

In the state in which the first clip 10 and the second clip 20 are assembled together, the first locking pawls 13 of the first clip 10 are located inside the intermediate cylinder portion 22 of the second clip 20. An outer peripheral region of the locking pawl-molding windows 17 outside the first locking pawls 13 is surrounded by the intermediate cylinder portion 22 of the second clip 20. The second flange 21 of the second clip 20 is disposed outside of a circumference of the locking pawl-molding windows 17.

### (Attached State of Stud Locking Device)

FIG. 34 is a sectional view depicting a state in which the target member 51 is attached to the support member 52 with the stud 60, using the stud locking device 1, taken along the line A-A in FIG. 10. FIG. 35 is a sectional view taken along the line B-B in FIG. 10. In FIG. 35, the stud 60 is indicated by the two-dot chain line, in order to visibly show the first locking pawl 13.

In the state in which the first clip 10 and the second clip 20 are fitted together, the target member 51 is clamped between the second flange 21 of the second clip 20 and the third flange 31 of the third clip 30. The upper surface of the third end portion 36 of the third clip 30 is in contact with a lower surface of the support member 52.

The first locking pawls 13 of the first clip 10 are engaged with the thread of the stud 60.

The upper surface of the second end portion 26 of the second clip 20 is in contact with the lower surface of the third end portion 36 of the third clip 30.

The third locking pawls 33 of the third clip 30 are engaged with the small-diameter section 22a of the intermediate cylinder portion 22 of the second clip 20, so that the second clip 20 is kept not to be pulled out of the third clip 30.

FIG. 34 indicates a distance y between the lower surface of the support member 52, and the upper surface of the second flange 21 of the second clip 20 being in contact with the lower surface of the target member 51. The outer peripheral region of the locking pawl-molding windows 17 of the first clip 10 is surrounded by the intermediate cylinder portion 22 of the second clip 20. Thus, the second flange 21 of the second clip 20 can be offset upwardly to a position horizontally overlapping the locking pawl-molding window 17.

Consequently, the distance "y" between the third end portion 36 of the third clip 30 (being in contact with the lower surface of the support member 52) and the upper surface of the second flange 21 (being in contact with the lower surface of the target member 51) becomes less than a distance x between the lower surface of the support member 6 and the upper surface of the flange 2a (being in contact with the lower surface of the target member 5), in the conventional stud locking device depicted in FIG. 7. That is, distance y < distance x.

The stud locking device 1 makes it possible to attach the target member 51 to the support member 52 at a shorter distance, as compared to the conventional stud locking device.

In one example, the distance x in the conventional stud locking device was 22.2 mm, whereas the distance y in the stud locking device according to this embodiment was 13.4 mm. That is, the stud locking device according to this embodiment could reduce the distance between the support member 52 and the target member 51 by 8 mm, as compared to the conventional stud locking device. Thus the stud locking device according to this embodiment makes it possible to attach the target member 51 to the support member 52 in adjacent relation.

### (Assembling of First Clip and Second Clip)

With reference to FIGS. 34 and 35, an operation of attaching the stud locking device 1 comprising the first clip 10, the second clip 20 and the third clip 30 each configured as above, to the target member 51 in a clamping manner, and then attaching the target member 51 with the stud locking device 1 to the stud 60 standingly provided on the support member 52 will be described.

First of all, the first clip 10 and the second clip 20 are assembled together. The first clip 10 is inserted into the second central hole C2 of the second clip 20 from the side of the hexagonal portion 25, wherein the first end portion 16 goes into the second central hole C2 first. In this operation, the main pillars 12 of the first clip 10 are positioned in the respective main pillar-receiving regions 22f, and the auxiliary pillars 14 of the first clip 10 are positioned in the respective auxiliary pillar-receiving regions 22g.

The upper surface of the first flange 11 of the first clip 10 is brought into contact with and stopped by the stepped section 25a of the hexagonal portion 25 of the second clip 20. The upper surface of the second end portion 26 of the second clip 20 and the upper surface of the first end portion 16 of the first clip 10 are located at approximately the same axial position.

The second locking pawls 23 of the second clip 20 are slidingly moved on the respective auxiliary pillars 14 of the first clip 10 while being opened radially outwardly, and fitted into and engaged with the fitting section 14a. A flat upper surface of each of the second locking pawls 23 is engaged with a flat lower surface of the fitting section 14a, so that the second locking pawls 23 fitted into the fitting section 14a are less likely to be pulled out of the fitting section 14a. In this way, the first clip 10 and the second clip 20 are assembled together, as depicted in FIGS. 32 and 33.

The first locking pawls 13 of the first clip 10 are located inside the intermediate cylinder portion 22 of the second clip 20. The outer peripheral region of the locking pawl-molding windows 17 outside the first locking pawls 13 is surrounded by the intermediate cylinder portion 22 of the second clip 20.

The first clip 10 and the second clip 20 are assembled together in the above manner, and stored in the form of a clip assembly as an assembly of the first clip 10 and the second clip 20.

After assembling the first clip 10 and the second clip 20, the second locking pawls 23 of the second clip 20 are engaged with the fitting section 14a of the first clip 10, so that it is difficult to separate the first clip 10 and the second clip 20 from each other.

### (Attachment to Target Member)

Then, the clip assembly as an assembly of the first clip 10 and the second clip 20, and the third clip 3 are attached to the target member 51 in such a manner as to clamp the target member 51 therebetween.

The clip assembly is disposed just below one of the mounting holes 53 of the target member 51, in a posture where the second end portion 26 of the clip assembly is oriented upwardly.

Further, the third clip 30 is disposed just above the mounting hole 53 of the target member 51, in a posture where the third flange 31 of the third clip 30 is oriented downwardly.

The clip assembly is inserted into the mounting hole 53 of the target member 51, wherein the second end portion 26 goes into the mounting hole 53 first. Then, the second end portion 26 after penetrating through the mounting hole 53 is gradually inserted into the third flange 31 of the third clip 30. That is, the second clip 20 is pushed such that it is received in the third central hole C3 of the third clip 30.

Through this operation, the target member 51 is clamped between the second flange 21 of the second clip 20 and the third flange 31 of the third clip 30.

When the upper surface of the second end portion 26 of the second clip 20 is brought into contact with the lower surface of the third end portion 36 of the third clip 30, the clip assembly cannot be moved upwardly against the third clip 30 any more.

The third locking pawls 33 of the third clip 30 are opened radially outwardly to ride over the second end portion 26 of the second clip 20, and fitted into the small-diameter section 22a of the second clip 20. The third locking pawls 33 of the third clip 30 are engaged with the small-diameter section 22a of the second clip 20, so that the clip assembly is locked to the third clip 30.

Thus, the target member 51 is clamped from opposite sides thereof by the second flange 21 of the second clip 20 and the third flange 31 of the third clip 30.

The protrusions 21 a of the flange 21 of the second clip 20 are engaged with the lower surface of the target member 51, so that it becomes possible to prevent a relative rotation between the second clip 20 and the target member 51 about the axis, and thus prevent loosening of the stud locking device 1 during use.

### (Attachment to Stud)

For example, in the case where the support member 52 is a panel of an automotive vehicle, the target member 51 having the stud locking device 1 attached thereto is carried in an assembling line of automotive vehicles.

An assembling worker sets the target member 51 having the stud locking device 1 attached thereto, to a given position of the support member 52 such as a panel of an automobile vehicle. The target member 51 is positioned to allow a corresponding one of the plurality of studs 60 fixedly attached to the support member 52 to be received in the first central hole C1 of the first clip 10 of the stud locking device 1. The stud locking device 1 is preliminarily attached to the target member 51. Thus, the worker does not have to touch the stud locking device 1, and can give his/her full attention to the operation of positioning the stud locking device 1 attached to the target member 51, to the stud 60.

After the positioning, the target member 51 is pressed against the support member 52 to receive the stud 60 into the first central hole C1 of the first clip 10. Through this operation, the stud 60 is inserted into the first central hole C1, and the first locking pawls 13 formed in the first clip 10 are bent outwardly to receive the stud 60. When the target member 51 is further pressed, the first locking pawls 13 are slidingly moved on the thread on the outer peripheral surface of the stud 60. Then when the upper surface of the third end portion 36 of the third clip 30 is brought into contact with the support member 52, the sliding movement of the first locking pawls 13 is stopped, and thereby the first locking pawls 13 are engaged with the thread of the stud 60. In this way, the stud locking device 1 clamping the target member 51 is coupled to the stud 60 fixed onto the support member 52.

After attaching the target member 51 to the support member 52, the hexagonal portion 25 of the second clip 20 can be further turned about the axis in one direction by a spanner or the like. In this case, the first clip 10 and the second clip 20 are rotated together to allow the first locking pawls 13 to be further tightly engaged with the stud 60.

In this process, an inclined outer edge of the flange 31 of the third clip 30 presses the target member 51 to clamp the target member by a given clamping force.

On the other hand, the hexagonal portion 25 of the second clip 20 can be rotated about the axis in the opposite direction by a spanner or the like, to rotate the first clip 10 and the second clip 20 together. Thus, it is possible to release the tightened state.

It is also possible to detach the clip assembly (the first clip 10 and the second clip 20) and the third clip 30 from the stud 60 to thereby detach the target member 51 from the support member 52.

Each of the third locking pawls 33 of the third clip 30 has a flat upper surface and the lower surface of the second end portion 26 of the second clip 20 has an approximately flat surface. Thus, after the third locking pawls 33 are engaged with the small-diameter section 22a, the second clip 20 and the third clip 30 are less likely to be disengaged from each other.

In the above embodiment, the target member 51 is clamped by the second flange 21 of the second clip 20 and the third flange 31 of the third clip 30, and the stud 60 is inserted into the first central hole C1 of the first clip 10 to cause the first locking pawl 13 to be engaged with the thread of the stud 60. Thus it becomes possible to easily and reliably attach the target member 51 to the support member 52.

In the above embodiment, a conventional clip to be brought into contact with a lower surface of a target member is formed as two separate components: the first clip 10; and the second clip 20. Then, the first clip 10 and the second clip 20 are assembled together to form a clip assembly. In a state in which the inner cylinder portion of the first clip 10 is received in the intermediate cylinder portion 22 of the second clip 20, the outer peripheral region of the locking pawl-molding windows 17 of the first clip 10 is surrounded by the intermediate cylinder portion 22 of the second clip 20. The second flange 21 of the second clip 20 is disposed outside a circumference of the locking pawl-molding window 17.

The target member 51 is clamped between the second range 21 of the clip assembly and the third flange 31 of the third clip 30, so that it becomes possible to shorten a distance between the third end portion 36 (which is in contact with the lower surface of the support member 52) and the second flange 21 of the second clip 20. This makes it possible to attach the target member 51 to the support member 52 in adjacent relation.

### LIST OF REFERENCE SIGNS

- 1:: stud locking device
- 2:: first clip
- 2a:: flange
- 2b:: inner cylinder portion
- 2c:: fitting section
- 2d:: protrusion
- 3:: second clip
- 3a:: flange
- 3b:: outer cylinder portion
- 3c:: fitting pawl
- 3d:: rib
- 4:: locking pawl
- 5:: target member
- 5a:: mounting hole
- 6:: support member
- 7:: stud
- 8:: locking pawl-molding window
- 10:: first clip
- 11:: first flange
- 12:: maim pillar
- 13:: first locking pawl
- 14:: auxiliary pillar
- 14a:: fitting section
- 15:: base section
- 16:: first end portion
- 17:: locking pawl-molding window
- 20:: second clip
- 21:: second flange
- 22:: intermediate cylinder portion
- 22a:: small-diameter section
- 22b:: lower section
- 22c:: vertical rib
- 22d:: horizontal rib
- 22f:: main pillar-receiving region
- 22g:: auxiliary pillar-receiving region
- 22h:: small inner-diameter region
- 23:: second locking pawl
- 25:: hexagonal portion
- 25a:: first stepped section
- 26:: second end portion
- 26e:: second stepped section
- 27:: recess
- 30:: third clip
- 31:: third flange
- 32:: outer cylinder portion
- 33:: third locking pawl
- 36:: third end portion
- 37:: flange hole
- 51:: target member
- 52:: support member
- 53:: mounting hole
- 60:: stud
- C1:: first central hole
- C2:: second central hole
- C3:: third central hole

## Claims

1. A stud locking device comprising a first clip, a second clip, and a third clip, wherein:
the first clip comprises a hollow inner cylinder portion, a first flange provided at one end of the inner cylinder portion, locking pawls formed inside the inner cylinder portion and configured to be engaged with a thread of a stud, and a coupling means for coupling with the second clip;
the second clip comprises a hollow intermediate cylinder portion configured to receive therein the inner cylinder portion of the first clip, a second flange provided at one end of the intermediate cylinder portion, a coupling means for coupling with the first clip, and a coupling means for coupling with the third clip; and
the third clip comprises a hollow outer cylinder portion configured to receive therein the intermediate cylinder portion of the second clip, a third flange provided at one end of the outer cylinder portion, and a coupling means for coupling with the second clip.

2. The stud locking device as recited in claim 1, wherein:
the inner cylinder portion of the first clip has a cross-sectionally non-circular outer shape; and
the intermediate cylinder portion of the second clip has a cross-sectionally non-circular inner shape conforming to the outer shape of the inner cylinder portion of the first clip,
whereby, in a state in which the inner cylinder portion of the first clip is received in the intermediate cylinder portion of the second clip, the first clip is kept not to be rotated against the second clip.

3. The stud locking device as recited in claim 1 or 2, wherein:
the intermediate cylinder portion of the second clip has a cross-sectionally circular outer shape; and
the outer cylinder portion of the third clip has a cross-sectionally circular inner shape,
whereby, in a state in which the intermediate cylinder portion of the second clip is received in the outer cylinder portion of the third clip, the second clip is permitted to be rotated against the third clip.

4. The stud locking device as recited in any one of claims 1 to 3, wherein the first clip has a locking pawl-molding window formed in the inner cylinder portion thereof in an outer peripheral region of the locking pawls formed inside the inner cylinder portion, and
wherein the stud locking device is configured such that, in a state in which the inner cylinder portion of the first clip is received in the intermediate cylinder portion of the second clip, the intermediate cylinder portion of the second clip is disposed in an outer peripheral region of the locking pawl-molding window.

5. The stud locking device as recited in any one of claims 1 to 4, which is configured such that, in a state in which the inner cylinder portion of the first clip is received in the intermediate cylinder portion of the second clip, the first flange of the first clip is in contact with a stepped section provided in the second clip.

6. The stud locking device as recited in any one of claims 1 to 5, which is configured to be attached to the stud through an operation of clamping a target member between the second flange of the second clip and the third flange of third clip, and then receiving the stud in a central hole of the stud locking device to cause the locking pawl to be engaged with the thread of the stud, wherein the stud is fixedly attached onto a support member.

7. A clip assembly comprising: a first clip and a second clip, wherein:
the first clip comprises a hollow inner cylinder portion, a first flange provided at one end of the inner cylinder portion, locking pawls formed inside the inner cylinder portion and configured to be engaged with a thread of a stud, and a coupling means for coupling with the second clip; and
the second clip comprises a hollow intermediate cylinder portion configured to receive therein the inner cylinder portion of the first clip, a second flange provided at one end of the intermediate cylinder portion, and a coupling means for coupling with the first clip, and wherein:
the first clip has a locking pawl-molding window formed in the inner cylinder portion thereof in an outer peripheral region of the locking pawls formed inside the inner cylinder portion, and wherein the stud locking device is configured such that, in a state in which the inner cylinder portion of the first clip is received in the intermediate cylinder portion of the second clip, the intermediate cylinder portion of the second clip is disposed in an outer peripheral region of the locking pawl-molding window.

8. The clip assembly as recited in claim 7, wherein:
the inner cylinder portion of the first clip has a cross-sectionally non-circular outer shape; and
the intermediate cylinder portion of the second clip has a cross-sectionally non-circular inner shape conforming to the outer shape of the inner cylinder portion of the first clip,
whereby, in the state in which the inner cylinder portion of the first clip is received in the intermediate cylinder portion of the second clip, the first clip is kept not to be rotated against the second clip.

9. The clip assembly as recited in claim 7 or 8, wherein the second flange of the second clip is disposed outside a circumference of the locking pawl-molding window, in the state in which the inner cylinder portion of the first clip is received in the intermediate cylinder portion of the second clip.
